# EUROPÄISCHE PATENTSCHRIFT

(11) **EP 1 913 607 B1**
(45) Veröffentlichungstag und Bekanntmachung des Hinweises auf die Patenterteilung: **30.12.2009**
(21) Anmeldenummer: 06776624.6
(22) Anmeldetag: 04.08.2006
(51) Int. Cl.: H01F 27/02, H01R 33/945, H01R 31/06

(54) **LAMPENSOCKEL FÜR EINE HOCHDRUCKENTLADUNGSLAMPE UND HOCHDRUCKENTLADUNGS- LAMPE**
BASE FOR A HIGH-PRESSURE DISCHARGE LAMP, AND HIGH-PRESSURE DISCHARGE LAMP
CULOT DE LAMPE DESTINE A UNE LAMPE A DECHARGE GAZEUSE HAUTE PRESSION ET LAMPE A DECHARGE GAZEUSE HAUTE PRESSION

(30) Priorität: 09.08.2005 DE 102005038043
(43) Veröffentlichungstag der Anmeldung: 23.04.2008
(73) Patentinhaber: Osram Gesellschaft mit beschränkter Haftung, 81543 München (DE)
(72) Erfinder: BÄTZ, Walter, 82404 Sindelsdorf (DE); RÖHL, Manfred, 83052 Bruckmühl (DE)
(86) Internationale Anmeldenummer: PCT/EP2006/007753
(87) Internationale Veröffentlichungsnummer: WO 2007/017202

(56) Entgegenhaltungen:
- EP-A- 1 067 827
- EP-A- 1 189 314
- EP-A- 1 511 130
- DE-A1- 19 839 458
- DE-C1- 19 913 942

## Beschreibung

Die Erfindung betrifft einen Lampensockel für eine Hochdruckentladungslampe gemäß dem Oberbegriff des Patentanspruchs 1 sowie eine Hochdruckentladungslampe mit einem derartigen Lampensockel.

### I. Stand der Technik

Ein derartiger Lampensockel ist beispielsweise in der EP 1 511 130 A1 offenbart. Diese Schrift beschreibt eine Hochdruckentladungslampe für einen Kraftfahrzeugscheinwerfer mit einem Lampensockel, in dem ein als Bestandteil einer Zündvorrichtung für die Hochdruckentladungslampe ausgebildeter Transformator angeordnet ist. Der Transformator befindet sich in einer Kammer des Lampensockels, wobei der Zwischenraum zwischen dem Transformator und den Wänden der Kammer mit einer Vergussmasse vollständig ausgefüllt ist und der Hochspannungsanschluss der Sekundärwicklung in der Vergussmasse eingebettet ist.

Es hat sich gezeigt, dass bei diesem Lampensockel aufgrund von Materialschrumpfung beim Aushärten der Vergussmasse und durch Temperaturschwankungen erhebliche Kräfte auf den Wandbereich der Kammer einwirken, die zu einer sichtbaren Deformation des Wandbereiches führten und somit die Maßhaltigkeit des Kunststoffsockelteils nicht mehr gewährleistet ist.

Die DE 198 38 458 A1 offenbart ein Verfahren zum Vergießen elektrische Bauelemente in einem Gehäuse sowie eine mit aushärtbarer Vergussmasse vergossene Vorrichtung, wobei der Vergussmasse ein Schäumungsmittel zugesetzt ist, so dass sich im Gehäuse ein Schichtaufbau der Vergussmasse bzw. des Füllstoffs mit unterschiedlicher Dichte ausbildet.

### II. Darstellung der Erfindung

Es ist Aufgabe der Erfindung, einen gattungsgemäßen Lampensockel bereitzustellen, bei dem der oben erläuterte Nachteil beseitigt ist.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Der erfindungsgemäße Lampensockel für eine Hochdruckentladungslampe weist einen in einer Kammer des Lampensockels angeordneten Transformator auf, wobei in dem Zwischenraum zwischen dem Transformator und den Wänden der Kammer Vergussmasse angeordnet ist und der für hohe Spannungen konstruierte Anschluss der Sekundärwicklung des Transformators in der Vergussmasse, die erfindungsgemäß nur einen Teil des Zwischenraums ausfüllt, eingebettet ist.

Es hat sich gezeigt, dass zur elektrischen Isolierung des Transformators der Zwischenraum zwischen Transformator und den Kammerwänden nicht vollständig mit Vergussmasse gefüllt sein muss. Es genügt, den für hohe Spannungen ausgelegten Anschluss der Sekundärwicklung des Transformators in der Vergussmasse einzubetten. Aufgrund des nur partiellen Vergusses des Transformators in der Kammer des Lampensockels werden von der Vergussmasse entsprechend geringere Kräfte auf die Kammerwände ausgeübt, die zu keiner sichtbaren Deformation der Kammer- bzw. Sockelwände führen. Außerdem wird dadurch Vergussmasse eingespart.

Gemäß dem bevorzugten Ausführungsbeispiel der Erfindung ist die Füllhöhe der Vergussmasse über dem Boden der Kammer kleiner als 50 Prozent der Höhe der Kammer, um die vorgenannten Kräfte möglichst gering zu halten. Außerdem ist der für hohe Spannungen ausgelegte Anschluss der Sekundärwicklung des Transformators vorzugsweise in geringem Abstand zum Boden der Kammer angeordnet, um bereits bei einer geringen Füllhöhe der Vergussmasse eine Einbettung des vorgenannten Anschlusses der Sekundärwicklung in der Vergussmasse zu gewährleisten.

Vorzugsweise besitzt der Transformator ein Gehäuse, in dem ein magnetischer Kern des Transformators, beispielsweise ein Ferritkern, und die Sekundärwicklung des Transformators angeordnet sind, wobei der verbleibende Hohlraum in dem Gehäuse mit der Vergussmasse ausgefüllt ist, um eine verbesserte elektrische Isolierung der Sekundärwicklung des Transformators zu ermöglichen.

Das Gehäuse des Transformators weist vorzugsweise mindestens eine Öffnung auf, um das Eindringen der Vergussmasse in den Hohlraum während des Vergusses zu ermöglichen. Das Gehäuse des Transformators ist vorteilhafterweise oberhalb des Füllstandes der Vergussmasse geschlossen ausgebildet und die mindestens eine Öffnung im Gehäuse des Transformators ist vollständig innerhalb der Vergussmasse angeordnet. Dadurch wird ein so genanntes Vakuumvergießen des Gehäuses des Transformators ermöglicht, wobei die Vergussmasse durch die mindestens eine Öffnung im Gehäuse eindringt und in den evakuierten Hohlraum des Transformatorgehäuses gesaugt wird, so dass der Hohlraum zwischen Gehäuse und dem magnetischen Kern mit der Sekundärwicklung vollständig mit der Vergussmasse gefüllt wird, obwohl der Vergusspegel in der Umgebung außerhalb des Transformators deutlich niedriger ist.

Alternativ kann auch die Kapillarwirkung zum Füllen des Hohlraums innerhalb des Transformatorgehäuses ausgenutzt werden.

### III. Beschreibung des bevorzugten Ausführungsbeispiels

Nachstehend wird die Erfindung anhand eines bevorzugten Ausführungsbeispiels näher erläutert. Es zeigen:
- Figur 1: Eine Seitenansicht einer erfindungsgemäßen Nochdruckentladungslampe in schematischer Darstellung
- Figur 2: Eine Draufsicht auf den Innenraum des Lampensockels der in Figur 1 dar- gestellten Hochdruckentladungslampe
- Figur 3: Eine Draufsicht auf den Transformator für den Einbau in den in Figur 2 dargestellten Lampensockel
- Figur 4: Eine schematische Darstellung zweier Ansichten der Kammer des in Figur 2 abgebildeten Lampensockels mit dem darin angeordneten, in Figur 3 ab- gebildeten Transformator

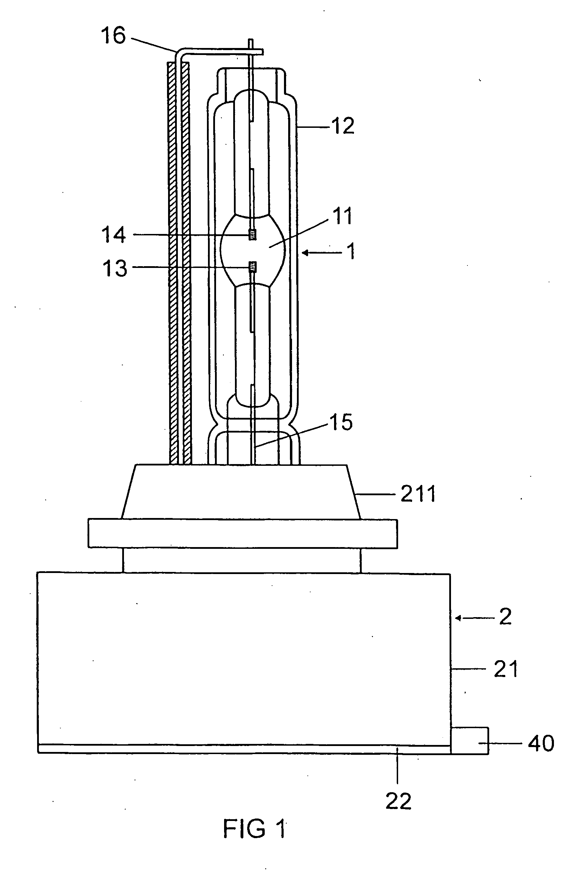

Bei dem in Figur 1 abgebildeten bevorzugten Ausführungsbeispiel der Erfindung handelt es sich um eine einseitig gesockelte Hochdruckentladungslampe für einen Kraftfahrzeugscheinwerfer. Diese Hochdruckentladungslampe besitzt ein von einem gläsernen Außenkolben 12 umschlossenes Entladungsgefäß 11 aus Quarzglas mit darin angeordneten Elektroden 13, 14 zum Erzeugen einer Gasentladung. Die Elektroden 13, 14 sind jeweils mit einer aus dem Entladungsgefäß 11 herausgeführten Stromzuführung 15 bzw. 16 verbunden, über die sie mit elektrischer Energie versorgt werden. Die aus dem Entladungsgefäß 11 und dem Außenkolben 12 bestehenden Baueinheit 1 ist in einer Aufnahme 211 des Lampensockels 2 fixiert. Der Lampensockel 2 besitzt ein im wesentlichen quaderförmiges Unterteil 21, in dem die elektrischen Bauteile einer Zündvorrichtung für die Hochdruckentladungslampe untergebracht sind und das mit dem elektrischen Anschluss 40 der Hochdruckentladungslampe ausgestattet ist.

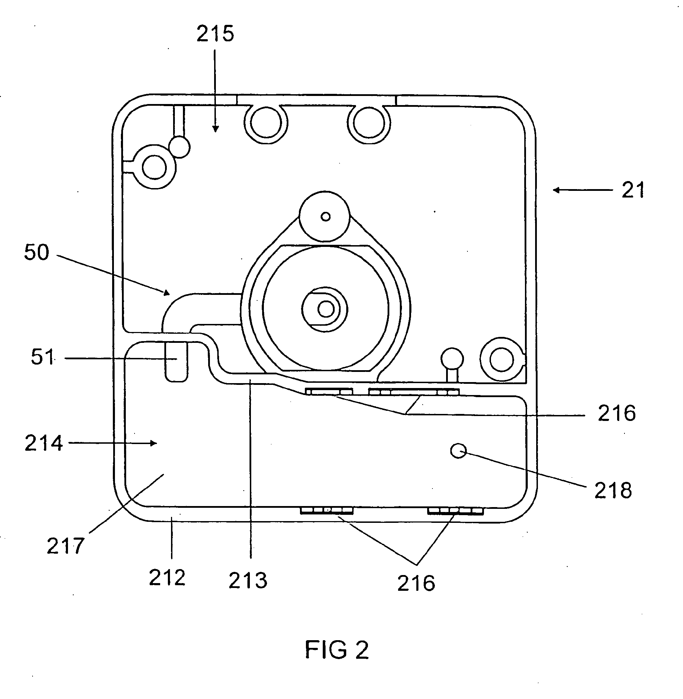

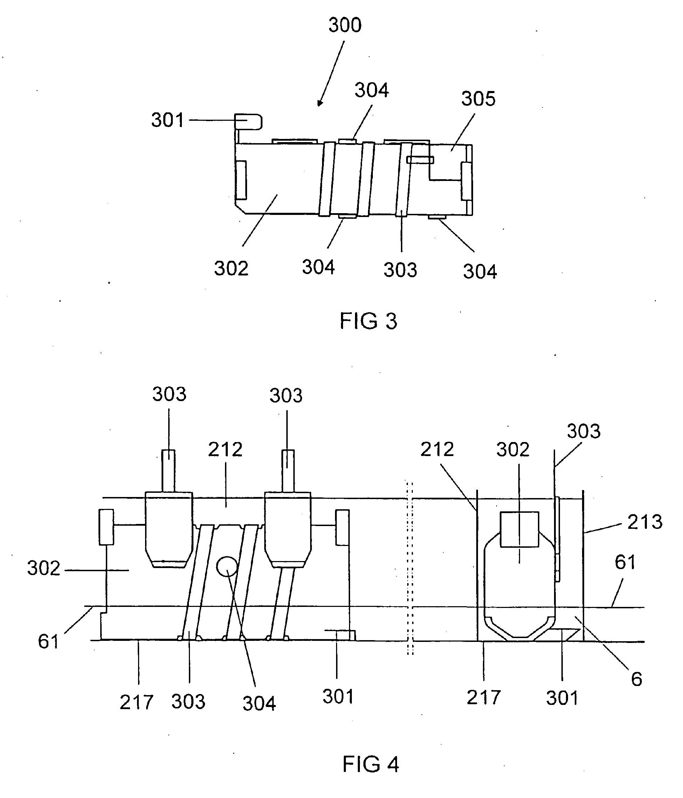

Die Figur 2 zeigt eine Draufsicht auf die von den Lampengefäßen 11,12 abgewandte Seite des Unterteils 21, vor der Montage des Deckels 22. Das Unterteil 21 besitzt einen im wesentlichen quadratischen Querschnitt. Der Innenraum des Unterteils 21 wird durch eine Trennwand 213 in zwei unterschiedlich große Kammern 214, 215 unterteilt. In der kleineren, ersten Kammer 214 ist ein Stabkerntransformator 300 angeordnet, der als Zündtransformator für die im Lampensockel 2 untergebrachte Impulszündvorrichtung der Hochdruckentladungslampe dient. Der in Figur 3 abgebildete Stabkerntransformator 300 besitzt eine auf einem Ferritkern angeordnete Sekundärwicklung mit einem für hohe Spannungen ausgelegten Anschluss 301, dem so genannten Zündspannungsanschluss 301, ein Transformatorgehäuse 302, das den Ferritkern und die Sekundärwicklung umschließt, und eine Primärwicklung 303, die auf dem Gehäuse 301 auf seiner Außenseite angeordnet und als Metallband 303 ausgebildet ist.

In den Wänden 212, 213 der ersten Kammer 214 sind mehrere Führungsschienen 216 für den in Figur 3 abgebildeten Stabkerntransformator 300 angeordnet. Die Führungsschienen 216 sind passgerecht auf entsprechende Stege 304 am Gehäuse 302 des Stabkerntransformators 300 abgestimmt, so dass die Position des Stabkerntransformators 300 in der ersten Kammer 214 dadurch festgelegt ist. Zusätzlich befindet sich in dem Boden 217 der Kammer 214 eine Noppe 218, die zusammen mit dem in die Kammer 214 hineinragenden Ende 51 eines Kontaktelementes 50 die Einbautiefe des Stabkerntransformators 300 bestimmt. Der Zündspannungsausgang 301 des Stabkerntransformators 300 sitzt auf dem in die Kammer 214 hineinragenden Ende 51 des Kontaktelementes 50 auf, das seinerseits mit der sockelnahen Stromzuführung 15 verbunden ist, und ist mit diesem verschweißt während das Gehäuse 302 des Stabkerntransformators 300 auf der Noppe 218 aufsitzt. Der Zwischenraum zwischen dem Stabkerntransformator 300 und den Wänden der ersten Kammer 214 ist bis zu einer Füllhöhe 61 von 5 Millimeter über dem Boden 217 der Kammer 214 mit einer elektrisch isolierenden Vergussmasse 6 ausgefüllt. Das in die Kammer 214 hineinragende Ende 51 des Kontaktelementes 50 und der damit verbundene Zündspannungsanschluss 301 sind in der Vergussmasse 6 vollständig eingebettet, wie in den beiden Ansichten gemäß der Figur 4 schematisch dargestellt ist. Die gesamte Höhe der Kammer 214 über ihrem Boden 217 beträgt 21 Millimeter. Die Füllhöhe der Vergussmasse in der Kammer 214 beträgt daher nur ca. 24 Prozent der Höhe der Kammer.

Die Vergussmasse dringt durch zwei nahe an dem Boden 217 der Kammer 214 angeordnete Öffnungen 305 im Transformatorgehäuse 302 auch in den Innenraum des Transformatorgehäuses 302 ein und füllt den zuvor evakuierten Hohlraum zwischen dem Ferritkern mit der darauf angeordneten Sekundärwicklung und dem Transformatorgehäuse 302 vollständig aus. Als Vergussmasse 6 eignet sich beispielsweise Silikon, das nach dem Vergießen ausgehärtet wird.

In der größeren, zweiten Kammer 21 sind die restlichen Komponenten der Impulszündvorrichtung, insbesondere der Zündkondensator und die Funkenstrecke, angeordnet. Der Deckel 22 verschließt beide Kammern 214, 215 des Unterteils 21.

## Patentansprüche

1. Lampensockel für eine Hochdruckentladungslampe mit einem in einer Kammer (214) des Lampensockels (2) angeordneten Transformator (300), wobei im Zwischenraum zwischen dem Transformator (300) und den Wänden der Kammer (214) Vergussmasse (6) angeordnet ist und der für hohe Spannungen ausgelegte Anschluss (301) der Sekundärwicklung des Transformators (300) in der Vergussmasse (6) eingebettet ist, wobei der Transformator (300) ein Gehäuse (302) besitzt, in dem ein magnetischer Kern des Transformators (300) und die Sekundärwicklung angeordnet sind und das mindestens eine Öffnung (305) aufweist, wobei die mindestens eine Öffnung (305) in der Vergussmasse (6) angeordnet ist,
**dadurch gekennzeichnet, dass**
- das Gehäuse (302) des Transformators (300) oberhalb des Füllstandes (61) der Vergussmasse (6) in der Kammer (214) geschlossen ausgebildet ist, so dass die Vergussmasse (6) während des Vergusses in den Hohlraum des Gehäuses (302) eindringt,
- nur ein Teil des Zwischenraums mit der Vergussmasse (6) gefüllt ist und die Vergusshöhe der Vergussmasse (6) über dem Boden (217) der Kammer (214) kleiner als 50 Prozent der Höhe der Kammer (214) ist und
- der Abstand des für hohe Spannungen ausgelegten Anschlusses (301) der Sekundärwicklung des Transformators (300) zum Boden (217) der Kammer (214) kleiner als die Vergusshöhe (61) der Vergussmasse (6) über dem Boden (217) der Kammer (214) ist.

2. Hochdruckentladungslampe mit einem Lampensockel nach Anspruch 1.

## Claims

1. Lamp base for a high-pressure discharge lamp with a transformer (300), which is arranged in a chamber (214) of the lamp base (2), casting compound (6) being arranged in the interspace between the transformer (300) and the walls of the chamber (214), and the connection (301), which is designed for high voltages, of the secondary winding of the transformer (300) being embedded in the casting compound (6), the transformer (300) having a housing (302), in which a magnetic core of the transformer (300) and the secondary winding are arranged and which has at least one opening (305), the at least one opening (305) being arranged in the casting compound (6), **characterized in that**
- the housing (302) of the transformer (300) is designed to be closed above the fill level (61) of the casting compound (6) in the chamber (214) so that the casting compound (6) enters the cavity of the housing (302) during casting,
- only part of the interspace is filled with the casting compound (6) and the casting height of the casting compound (6) above the bottom (217) of the chamber (214) is less than 50 percent of the height of the chamber (214), and
- the distance between the connection (301), which is designed for high voltages, of the secondary winding of the transformer (300) and the bottom (217) of the chamber (214) is less than the casting height (61) of the casting compound (6) above the bottom (217) of the chamber (214).

2. High-pressure discharge lamp with a lamp base according to Claim 1.

## Revendications

1. Culot de lampe pour une lampe à décharge à haute pression, comprenant un transformateur ( 300 ) disposé dans une chambre ( 214 ) du culot ( 2 ) de la lampe, dans lequel une composition ( 9 ) de scellement est disposée dans l'espace intermédiaire compris entre le transformateur ( 300 ) et les parois de la chambre ( 214 ) et la borne ( 301 ) destinée à des tensions hautes de l'enroulement secondaire du transformateur ( 300 ) est incorporée dans la composition ( 6 ) de scellement, le transformateur ( 300 ) ayant un boîtier ( 302 ), dans lequel un noyau magnétique du transformateur ( 300 ) et l'enroulement secondaire sont disposés et qui a au moins une ouverture ( 305 ), la au moins une ouverture ( 305 ) étant disposée dans la composition ( 6 ) de scellement,
**caractérisé en ce que**
- le boîtier ( 302 ) du transformateur ( 300 ) est constitué de manière fermée au-dessus du niveau ( 61 ) de remplissage de la composition ( 6 ) de scellement dans la chambre ( 214 ) de sorte que la composition ( 6 ) de scellement pénètre pendant le scellement dans la cavité du boîtier ( 302 ),
- seule une partie de l'espace intermédiaire est emplie de la composition ( 6 ) de scellement et le niveau de la composition ( 6 ) de scellement au-dessus du fond ( 217 ) de la chambre ( 214 ) représente moins de 50 pourcent de la hauteur de la chambre ( 214 ) et
- la distance de la borne ( 301 ), conçue pour des tensions hautes, de l'enroulement secondaire du transformateur ( 300 ) au fond ( 217 ) de la chambre ( 214 ) est plus petite que le niveau ( 61 ) de la composition ( 6 ) de scellement au-dessus du fond ( 217 ) de la chambre ( 214 ).

2. Lampe à décharge à haute pression ayant un culot de lampe suivant la revendication 1.
